# EUROPÄISCHE PATENTSCHRIFT

(11) **EP 1 343 573 B1**
(45) Veröffentlichungstag und Bekanntmachung des Hinweises auf die Patenterteilung: **02.03.2005**
(21) Anmeldenummer: 01271251.9
(22) Anmeldetag: 20.11.2001
(51) Int. Cl.: B01D 46/24, B01D 46/52

(54) **FILTERELEMENT ZUR STIRNSEITIGEN ANSTRÖMUNG**
FILTER ELEMENT FOR FRONT-FACE INFLOW
ELEMENT FILTRANT POUR ECOULEMENT D'ENTREE FRONTAL

(30) Priorität: 21.12.2000 DE 10063789
(43) Veröffentlichungstag der Anmeldung: 17.09.2003
(73) Patentinhaber: Mann + Hummel GmbH, 71638 Ludwigsburg (DE)
(72) Erfinder: WINTER, Manfred, 74229 Oedheim (DE); GÖRG, Günter, 71696 Möglingen (DE); POH, Ralf, 67365 Schwegenheim (DE)
(74) Vertreter: Voth, Gerhard, Dipl.-Ing.
(86) Internationale Anmeldenummer: PCT/EP2001/013401
(87) Internationale Veröffentlichungsnummer: WO 2002/049741

(56) Entgegenhaltungen:
- EP-A- 0 925 818
- WO-A-87/01301
- US-A- 3 020 977
- US-A- 5 630 940

## Beschreibung

### Stand der Technik

Die Erfindung betrifft ein Filterelement zur stirnseitigen Anströmung, bestehend aus sich abwechselnden flachen und gefalteten Lagen, die Kanäle mit dreieckigem Querschnitt ergeben, wobei durch einen entsprechenden wechselseitigen Verschluß der Kanäle eine Durchströmung des Filtermediums durch das zu filternde Fluid erfolgt, nach der Gattung des Patentanspruches 1. Außerdem betrifft die Erfindung einen Filter, in den das beschriebene Filterelement eingebaut ist.

Filterelemente zur stirnseitigen Anströmung sind hinlänglich bekannt. Diese Filter sind z. B. aus Filterlagen gewickelt, die abwechselnd flach und wellenförmig ausgebildet sind. Hierdurch entstehen Kanäle, die durch einen wechselseitigen Verschluß eine Durchströmung des Filtermediums erzwingen. Danach tritt das zu filternde Medium durch stirnseitig offene Kanäle auf der Eintrittsseite des Filters ein und wechselt innerhalb des Filterelementes in Kanäle, die abströmseitig geöffnet sind, und den Einströmkanälen benachbart sind. Dadurch findet eine Filterung des Fluids statt.

Ziel einer solchen Filtergestaltung ist es einerseits, den Einbauraum für das Filterelement so weit wie möglich zu verringern. Dabei bilden die Stirnseiten des Filterelementes eine Anströmseite und eine Abströmseite. Die Kanäle, die mit der Anströmseite verbunden sind, bilden die Rohseite des Filters und die abströmseitigen die Reinseite. Daher können solche Filter sehr kompakt z. B. als sogenannter Inlinefilter in Rohrleitungen eingebaut werden. Gleichzeitig soll die Filterkapazität weitestmöglich gesteigert werden. Dies ist jedoch bei wellenförmiger Ausführung der Filterlagen nur in begrenztem Maße möglich. Es hat sich nämlich gezeigt, dass die zulaufenden Kanäle im Bereich der Berührung zwischen der wellenförmigen Filterlage mit der flachen Filterlage wenig durchströmt werden, so dass das Filtermedium in diesen Teilen weniger mit Partikel beaufschlagt wird, als in anderen. Durch die ungleichmäßige Beladung des Filtermediums ist das Standzeitende des Filters, welches durch den an ihm anlegenden Druckabfall bestimmt ist, bereits zu einem Zeitpunkt erreicht, bei dem Teile des Filtermediums die Grenzbeladung noch nicht erreicht haben.

Es ist weiterhin z. B. aus der WO 87/01301 und aus der US 3,020,977 bekannt, zick-zack-förmig gefaltete Filterlagen in Wickelfiltern zu verwenden. Diese sollen als Abstandhalter zwischen den einzelnen Filterlagen wirken. Dabei wird abwechselnd eine an der Filterung des Fluids beteiligte Filterlage und eine weitere Lage gewickelt, wobei die weitere Lage z. B. zur elektrostatischen Entladung des zu filternden Fluids bzw. der darin enthaltenen Teilchen dienen kann (WO 87/01301). Die flache Lage kann weiterhin dazu verwendet werden, um eine zuverlässige Beabstandung der gefalteten, an der Filterung beteiligten Lagen zu erreichen (US 3,020,977). Dabei wird die flache Lage als zusätzliche Lage in den Filter eingebracht, und teilt auf diese Weise die durch die zick-zack-förmig gefalteten Filterlagen entstandenen rautenförmigen Kanäle in einer der Diagonalen.

Derartige Filter sind jedoch teuer in der Herstellung. Außerdem ist an der Filterung des Fluids nur die Hälfte der verwendeten Lagen beteiligt. Dadurch ist eine Optimierung des Verhältnisses zwischen Bauraum und Filterfläche nicht gegeben.

Aufgabe der Erfindung ist es daher, ein Filterelement zur stirnseitigen Anströmung zu schaffen, welches kostengünstig in der Herstellung ist und eine optimale Filterfläche sowie -kapazität im Verhältnis zum Bauvolumen aufweist. Diese Aufgabe wird durch die Merkmale des Anspruches 1 gelöst.

### Vorteile der Erfindung

Das erfindungsgemäße Filterelement besteht aus mindestens einer flachen sowie einer gefalteten Lage. Die gefaltete Lage besteht aus einem gefalteten Filtermedium, welches zwischen den Falten Faltkanten ausbildet. In dem Fall, dass das Filterelement als Wickelfilter ausgebildet ist, genügt jeweils eine flache und eine gefaltete Lage, die im Wechsel aufgewickelt werden. Soll das Filterelement blockartig ausgeführt sein, so müssen mehrere Filterlagen (abwechselnd flache und gefaltete) übereinander geschichtet werden.

Weiterhin müssen Mittel zur Abdichtung der Anströmseite von der Abströmseite im Einbauort vorgesehen werden. Den Einbauort kann z. B. ein Filtergehäuse darstellen. Eine andere Möglichkeit ist die Verwendung des Filterelementes in einer Rohrleitung als Inlinefilter. Die Mittel zum Einbau können unterschiedlich ausgebildet sein. Beispielsweise ist eine feste Verklebung des Filterelementes im Einbauort denkbar. Eine andere Möglichkeit ist die Ausbildung des Filterelementes als Wechseleinsatz, wobei Dichtungen im Einbauort oder am Filterelement angebracht sein müssen, die Anströmseite und Abströmseite voneinander trennen.

Sowohl flache als auch gefaltete Lagen des Filterelementes sind an der Filterung beteiligt, d. h. sie bestehen aus einem Filtermedium. Dabei können gleichartige oder verschiedenartige Filtermedien zum Einsatz kommen. Weiterhin sind zumindest im Inneren des Filterelementes, also in einem gewissen Abstand zum Rand des Filterelementes die Kanäle derartig verschlossen, dass an alle drei Seiten eines jeweiligen anströmseitigen Kanals abströmseitige Kanäle benachbart sind. Damit sind alle drei Seiten des jeweiligen anströmseitigen Kanales als Filter aktiv. Hierdurch kann im Verhältnis zur verbauten Filterfläche des Filtermediums die maximale Schmutzaufnahmekapazität erreicht werden.

Verbessert wird dieser Effekt weiterhin dadurch, dass die drei Seiten der jeweiligen Kanäle bis zu den durch die Faltkanten des Filtermediums gebildeten Ecken nutzbar sind. Dies ist mit dem dreieckigen Querschnitt zu erklären, der nicht, wie eingangs beschrieben, bei wellenförmigen Zwischenlagen zu Bereichen im Filtermedium führt, die so stark spitz zusammenlaufen, dass ein messbarer Fluidstrom nicht mehr stattfindet. Durch den zur Verfügung gestellten Querschnitt wird gleichzeitig der Durchströmungswiderstand des Filterelementes minimiert.

Am Rand des Filterelementes läßt sich die Bedingung, dass an jeden anströmseitigen Kanal ein abströmseitiger Kanal grenzen soll, nur eingeschränkt verwirklichen. Dies liegt daran, dass im Randbereich des Filterelementes anströmseitige Kanäle vorliegen, die keine benachbarten abströmseitigen Kanäle mehr aufweisen sondern den Rand des Filterelementes. Diese Einschränkung muß aufgrund der Geometrie des Filterelementes jedoch hingenommen werden.

Das Filterelement kann, wie bereits beschrieben, durch Aufrollen der Filterlagen zu einer zylindrischen Form gebracht werden oder durch Schichtung mehrerer der flachen und gefalteten Lagen hergestellt werden. Das zylindrische Filterelement muß nicht kreiszylindrisch sein. Es sind auch andere Formen, z. B. elliptisch, denkbar. Bei Schichtung der Lagen lassen sich neben quaderförmigen Filterelementen auch stufenförmige Filterelemente mit gestaffelt montierten Filterschichten sowie räumlich verdrehte Strukturen schaffen. Die gewickelten Filterelemente können auch kegelig aufgerollt werden, was einer stufenförmigen Schichtung bei quaderförmigen Filterelementen entspricht. Damit läßt sich jeder Querschnitt durchströmter Strukturen annähernd vollständig durch das Filtermedium ausfüllen. Es ist eine optimale Ausfüllung des zur Verfügung stehenden Bauraumes erreicht.

Gemäß einer besonderen Ausgestaltung der Erfindung sind die Kanäle des Filterelementes derart angeordnet, dass jeweils sechs benachbarte von ihnen zusammen einen sechseckigen Querschnitt bilden. Das heißt, dass die Faltkanten zweier benachbarter, gefalteter Bahnen, die durch eine flache Bahn getrennt sind, in einer Linie zusammenlaufen. Auf diese Weise kann die Menge an Filtermaterial, die nicht zur Filtrierung genutzt werden kann, minimiert werden. Allerdings ist die Bedingung, dass die anströmseitigen Kanäle ausschließlich abströmseitige Kanäle anschließen sollen, auch gegeben, wenn ein Versatz zwischen benachbarten, gefalteten Lagen des Filterelementes vorliegt. Dabei mündet jedoch diejenige Seite der anströmseitigen Kanäle, die durch die flache Zwischenlage gebildet ist, in jeweils zwei abströmseitige Kanäle, die durch eine Faltkante der gefalteten Lage getrennt sind.

Eine besondere Ausgestaltung der Erfindung sieht vor, dass die Kanäle einen Querschnitt von gleichseitigen Dreiecken aufweisen. In diesem Fall sind die bereitsbeschriebenden Vorteile bei der Durchströmung des Filtereinsatzes am stärksten ausgeprägt. Jedoch können die Falten der gefalteten Lagen auch stärker zusammengeschoben oder weiter auseinandergezogen werden. In diesen Fällen ergeben sich Vorteile in der Packungsdichte des Filtermediums im Verhältnis zum Bauvolumen. Die genaue Geometrie des Filtereinsatzes hinsichtlich der Faltwinkel der gefalteten Lage ist also abhängig vom Einsatzfall zu bestimmen, um hierfür zu einem optimalen Ergebnis zu kommen.

Das Filterelement kann vorteilhaft mit einem Filterrahmen versehen sein, der zum Einbau in ein Gehäuse dient. An diesen Filterrahmen kann z. B. die Dichtung angebracht sein, die eine zuverlässige Trennung zwischen Anström- und Abströmseite gewährleistet. Der Filterrahmen verschafft dem Filterelement eventuell zusätzliche Stabilität und erleichtert ein Auswechseln des Filterelementes.

Das Filterelement kann weiterhin an den Seitenflächen, die sich zwischen der abströmseitigen und der anströmseitigen Stirnfläche befinden, eine Abschlusslage aufweisen. Diese kann zu einer zusätzlichen Dichtung bzw. Bildung von anströmseitigen oder abströmseitigen Kanälen im Randbereich des Filterelementes dienen. Sie kann aus dem Filtermedium selbst bestehen oder aus einem anderen Material, z. B. einer für das Fluid undurchlässigen Abschlusslage.

Ein Filter, in den der beschriebene Filtereinsatz eingebaut ist, wird ebenfalls ausdrücklich unter Schutz gestellt.

Diese und weitere Merkmale von bevorzugten Weiterbildungen der Erfindung gehen außer aus den Ansprüchen auch aus der Beschreibung und der Zeichnung hervor, wobei die einzelnen Merkmale jeweils für sich allein oder zu mehreren in Form von Unterkombinationen bei der Ausführungsform der Erfindung und auf anderen Gebieten verwirklicht sein und vorteilhafte sowie für sich schutzfähige Ausführungen darstellen können, für die hier Schutz beansprucht wird.

### Zeichnung

Weitere Einzelheiten der Erfindung werden in der Zeichnung anhand von schematischen Ausführungsbeispielen beschrieben. Hierbei zeigen
- Figur 1: den Aufbau eines Inlinefilters mit zylindrischem Filterelement als schematischer Mittelschnitt,
- Figur 2: den Ausschnitt aus einem als Block ausgeführten Filterelement perspektivisch,
- Figur 3: schematisch das Faltmuster von fünf Lagen, wobei die gefaltete Lage zusammengeschoben ist,
- Figur 4: das Faltmuster von sieben Lagen als Ausschnitt aus einem zylindrischen, gewickelten Filterelement, wobei die gefaltete Lagen auseinandergezogen sind,
- Figur 5: die perspektivische, schematische Ansicht eines als Block ausgeführten Filterelementes mit Filterrahmen, welches verdreht ist und
- Figur 6: die schematische, perspektivische Ansicht eines stufig ausgeführten Filterelementes.

### Beschreibung der Ausführungsbeispiele

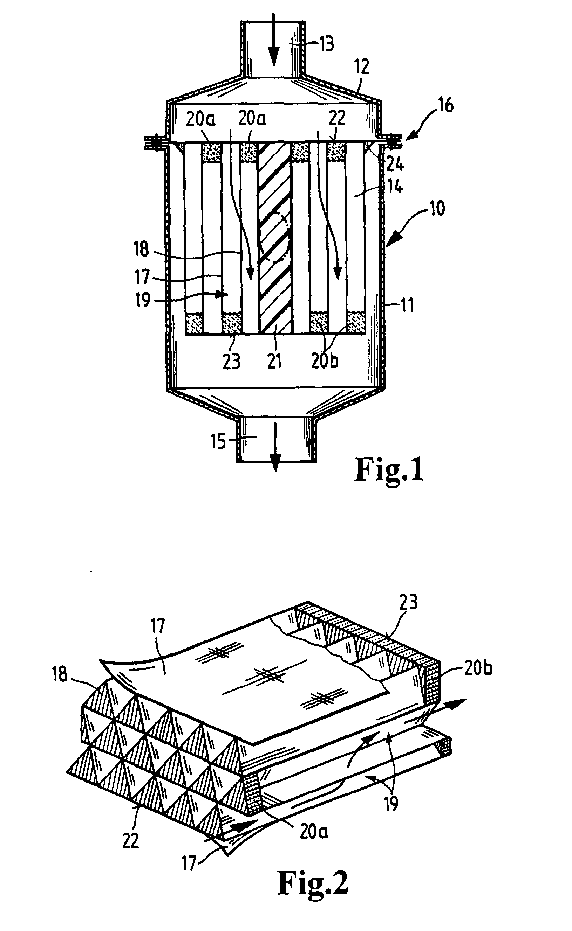

Ein Inlinefilter gemäß Figur 1 weist ein Gehäuse 10 mit einem Gehäusetopf 11 und einem Deckel 12 auf. Im Deckel ist ein Einlass 13 gebildet, durch den das Fluid entsprechend der angedeuteten Pfeile in das Gehäuse einströmt, um durch einen Filtereinsatz 14 und durch einen Auslass 15 zu strömen. Der Filtereinsatz 14 ist in einer Trennfuge 16 des Gehäuses fixiert.

Der Filtereinsatz 14 ist als Wickeleinsatz ausgeführt und schematisch dargestellt. Durch verschiedene Lagen 17, 18 sind Kanäle 19 gebildet, die von dem zu filternden Fluid durchströmt werden. Die Kanäle sind wechselseitig durch Verschlüsse 20a, b versiegelt, so dass das zu filternde Fluid bei der Durchströmung des Filtereinsatzes 14 die Kanäle wechseln muß. Dadurch findet eine Filtration des Fluids statt. Die Lagen 17, 18 sind weiterhin dichtend um einen Kern 21 z. B. mit ovalem Querschnitt gewickelt.

Um eine zuverlässige Trennung zwischen einer Anströmseite 22 und einer Abströmseite 23 zu erzeugen, ist der Filtereinsatz in einem Filterrahmen 24 gehalten. Dieser wird in der Trennfuge 16 des Gehäuses verklemmt.

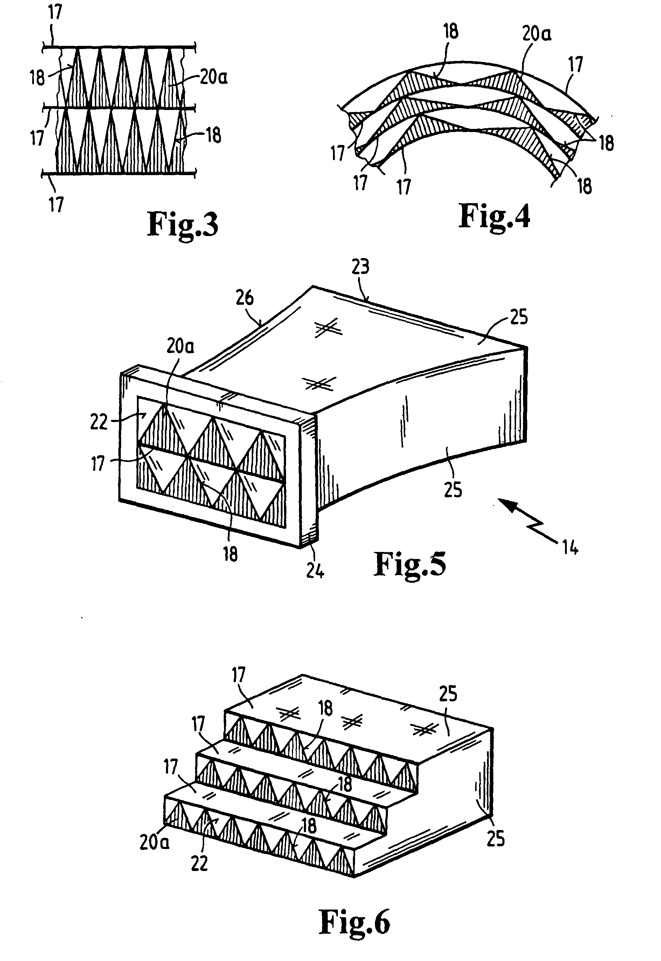

Ein Ausschnitt aus einem geschichteten Filterelement mit grundsätzlich quaderförmiger Struktur ist in Figur 2 dargestellt. Dieses Element weist als Querschnitt für die Kanäle 19 gleichseitige Dreiecke auf. Anströmseite 22 und Abströmseite 23 sind wechselseitig durch die Verschlüsse 20a, b abgedichtet, so dass das Fluid bei der Durchströmung des Filtereinsatzes den durch Pfeile angedeuteten Weg nehmen muß.

Das Filterelement ist gebildet durch die abwechselnde Anordnung von flachen Lagen 17 und gefalteten Lagen 18. Dadurch werden die Wände der Kanäle gebildet. Diese sind derart angeordnet, dass ein anströmseitiger Kanal jeweils drei benachbarte, abströmseitige Kanäle hat und umgekehrt. Damit wird bis auf die Faltkanten selbst, die zur Verfügung stehende Fläche des Filtermaterials zur Filtrierung des Fluids genutzt. Die sogenannten Quetschspalte, die bei Verwendung von wellenförmig gestalteten Zwischenlagen entstehen, können auf diese Weise vollständig verhindert werden.

In Figur 3 ist eine alternative Ausgestaltung der gefalteten Lagen 18 zu erkennen. Diese werden in einem geringeren Winkel als 60° gefaltet, so dass eine größere Packungsdichte als in dem in Figur 2 dargestellten Filterelement möglich ist.

In Figur 4 werden die Falten auseinander gezogen, so dass größere Winkel als 60° entstehen. Hier ist als Beispiel ein gewickelter Filter dargestellt. Zu erkennen ist weiterhin, dass auch, wenn die Faltkanten der gefalteten Lagen sich nicht auf den gegenüberliegenden Seiten der flachen Lage treffen, gewährleistet ist, dass rohseitige und reinseitige Kanäle sich einander abwechseln. Dabei wird nur unwesentlich mehr Filterfläche verschenkt als bei dem Beispiel gemäß Figur 2.

In Figur 5 ist ein als Block ausgeführter Filter schematisch dargestellt. Dieser weist an der Anströmseite 22 den Filterrahmen 24 auf, der den Einbau in ein nicht dargestelltes Gehäuse erleichtert. Weiterhin ist der dargestellte Filtereinsatz verwunden, so dass die Anströmseite und die Abströmseite des Filters nicht fluchten. Bei einem solchen Filter muß ein genügend elastisches Filtermedium zum Einsatz kommen. Das Filterelement ist rundherum mit einer Abschlusslage 25 versehen, welche gleichzeitig einen Rand 26 des Filtereinsatzes bildet.

Figur 6 stellt ein Beispiel dar, in welchem die Lagen 17, 18 gestaffelt verbaut werden. Dabei entsteht eine stufige Struktur des Filters, was bei entsprechendem Einbau in ein nicht dargestelltes Filtergehäuse strömungstechnische Vorteile haben kann. Auch dieser Filter ist mit einer Abschlusslage 25 versehen.

## Patentansprüche

1. Filterelement zur stirnseitigen Anströmung, aufweisend
- mindestens eine flache Lage (17) und mindestens eine gefaltete Lage (18), wobei die mindestens eine flache Lage mit der mindestens einen gefalteten Lage im Wechsel derart angeordnet ist, dass sich Kanäle (19) mit dreieckigem Querschnitt ergeben,
- dichte Verschlüsse (20a, b) jeweils der einer ersten Gruppe von Kanälen (19) einerseits und dichte Verschlüsse (20a, b) der restlichen, nicht zu genannter Gruppe zählenden Kanäle (19) einer zweiten Gruppe andererseits derart, dass das zu filternde Fluid bei der Durchströmung des Filterelementes von einer Anströmseite (22), gebildet durch eine Stirnseite des Filterelementes, zu einer Abströmseite (23), gebildet durch dessen andere Stirnseite, eine der genannten Lagen (17, 18), die zur Filterung des Fluides vorgesehen ist, durchtreten muss,
- Mittel zur Abdichtung der Anströmseite (22) von der Abstömseite (23) im Einbauort des Filerelementes,
**dadurch gekennzeichnet, dass**
- sowohl die mindestens eine flache Lage (17) als auch die mindestens eine gefaltete Lage (18) aus durchströmbaren Filtermedien bestehen,
- an jeder den dreieckigen Querschnitt bildenden Seite derjenigen Kanäle der ersten Gruppe, die vom Rand (26) des Filterelementes beabstandet sind, ein Kanal der zweiten Gruppe benachbart ist, so dass die vollständige Fläche der Kanäle der ersten Gruppe bis auf Faltkanten der Kanäle vom Fluid durchströmbar ist.

2. Filterelement nach Anspruch 1, **dadurch gekennzeichnet, dass** dieses eine im wesentlichen zylindrische Form aufweist und durch Aufrollen zumindest einer gefalteten Lage (18) und einer flachen Lage (17) im Wechsel hergestellt ist.

3. Filterelement nach Anspruch 1, **dadurch gekennzeichnet, dass** dieses durch eine Schichtung mehrerer der flachen Lagen (17) und gefalteten Lagen (18) im Wechsel hergestellt ist.

4. Filterelement nach Anspruch 3, **dadurch gekennzeichnet, dass** die Kanäle (19) derart angeordnet sind, dass jeweils sechs benachbarte von ihnen zusammengenommen einen sechseckigen Querschnitt bilden.

5. Filterelement nach einem der vorherigen Ansprüche, **dadurch gekennzeichnet, dass** die Kanäle (19) den Querschnitt von gleichseitigen Dreiecken aufweisen.

6. Filterelement nach einem der vorherigen Ansprüche, **dadurch gekennzeichnet, dass** die einzelnen Lagen gestaffelt zueinander angeordnet sind.

7. Filterelement nach einem der vorherigen Ansprüche, **dadurch gekennzeichnet, dass** dieses einen Filterrahmen (24) zum Einbau in ein Gehäuse (10) aufweist.

8. Filterelement nach einem der vorherigen Ansprüche, **dadurch gekennzeichnet, dass** dieses an den die beiden Stirnflächen verbindenden Seitenflächen eine Abschlusslage (25) aufweist.

9. Filter, umfassend ein Gehäuse (10) mit einem Einlass (13) und einem Auslass (15) für das zu filternde Medium, **dadurch gekennzeichnet, dass** in diesen ein Filterelement nach einem der vorherigen Ansprüche eingebaut ist.

## Claims

1. Filter element for in-coming flow at the end face, said filter element including
- at least one flat layer (17) and at least one folded layer (18), wherein the at least one flat layer is disposed so as to alternate with the at least one folded layer in such a manner that channels are produced (19) with a triangular cross-section,
- tight seals (20a, b) respectively of the one first group of channels (19) on one side and tight seals (20a, b) of the remaining channels (19), not counted as part of the aforementioned group, of a second group on the other side in such a manner that the fluid to be filtered, when flowing through the filter element from an in-coming side (22), formed by one end face of the filter element, to an outgoing side (23), formed by its other end face, has to pass through one of the named layers (17, 18), which is provided for filtering the fluid,
- means for sealing the incoming side (22) from the outgoing side (23) in the mounting location of the filter element,
**characterised in that**
- both the at least one flat layer (17) and the at least one folded layer (18) are produced from traversable filter media,
- on each side, forming the triangular cross-section, of the respective channels of the first group, which are at a spacing from the edge (26) of the filter element, a channel of the second group is adjoining, such that the complete face of the channels of the first group is traversable by the fluid as far as the folded edges of the channels.

2. Filter element according to claim 1, **characterised in that** said filter element has a substantially cylindrical form and is produced by rolling up at least one folded layer (18) and one flat layer (17) in an alternate manner.

3. Filter element according to claim 1, **characterised in that** said filter element is produced by means of layering a plurality of flat layers (17) and folded layers (18) in an alternate manner.

4. Filter element according to claim 3, **characterised in that** the channels (19) are disposed in such a manner that respectively six adjacent channels together form a hexagonal cross-section,

5. Filter element according to one of the preceding claims,
**characterised in that** the channels (19) have an equilateral triangle cross-section.

6. Filter element according to one of the preceding claims,
**characterised in that** the individual layers are disposed staggered one relative to another.

7. Filter element according to one of the preceding claims,
**characterised in that** said filter element includes a filter frame (24) for mounting in a housing (10).

8. Filter element according to one of the preceding claims,
**characterised in that** said filter element includes a final layer (25) on the lateral faces which connects the two end faces.

9. Filter, including a housing (10) with an inlet (13) and an outlet (15) for the medium to be filtered, **characterised in that** a filter element according to one of the preceding claims is mounted in said filter.

## Revendications

1. Elément filtrant pour écoulement d'entrée frontal, comprenant :
- au moins une couche plate (17) et au moins une couche plissée (18), l'au moins une couche plate étant disposée en alternance avec l'au moins une couche plissée de sorte qu'il en résulte des canaux (19) ayant une section transversale triangulaire,
- des fermetures étanches (20a, b) respectivement de l'un des premiers groupes de canaux (19) d'une part et des fermetures étanches (20a, b) des canaux restant (19) d'un deuxième groupe ne faisant pas partie du groupe mentionné d'autre part, de sorte que lorsque le fluide à filtrer traverse l'élément filtrant depuis un côté d'écoulement d'entrée (22), formé par une face frontale de l'élément filtrant, jusqu'à un côté d'écoulement de sortie (23), formé par l'autre face frontale de l'élément filtrant, il doit passer à travers l'une des couches mentionnées (17, 18) prévue pour la filtration du fluide,
- un moyen pour obturer le côté d'écoulement (22) depuis le côté d'écoulement de sortie (23) sur le lieu d'installation de l'élément filtrant,
**caractérisé en ce que**
- aussi bien l'au moins une couche plate (17) qu'une couche plissée (18) sont constituées de milieux filtrants pouvant être traversés, et
- sur chaque côté de ces canaux du premier groupe formant la section transversale triangulaire qui sont à distance du bord (26) de l'élément filtrant, un canal du second groupe est placé de façon adjacente, de sorte que la totalité de la surface des canaux du premier groupe, à l'exception des bords plissés des canaux, puisse être traversée par le fluide.

2. Elément filtrant selon la revendication 1,
**caractérisé en ce qu'**
il présente une forme sensiblement cylindrique et est conçu par l'enroulement en alternance d'au moins une couche plissée (18) et d'une couche plate (17).

3. Elément filtrant selon la revendication 1,
**caractérisé en ce qu'**
il est formé par une superposition en alternance de plusieurs couches plates (17) et de plusieurs couches plissées (18).

4. Elément filtrant selon la revendication 3,
**caractérisé en ce que**
les canaux (19) sont disposés de sorte que six d'entre eux respectivement placés de manière adjacente forment, une fois rassemblés, une section transversale hexagonale.

5. Elément filtrant selon l'une quelconque des revendications précédentes,
**caractérisé en ce que**
les canaux (19) présentent la section transversale de triangles équilatéraux.

6. Elément filtrant selon l'une quelconque des revendications précédentes,
**caractérisé en ce que**
les couches individuelles sont disposées de manière à être échelonnées les unes par rapport aux autres.

7. Elément filtrant selon l'une quelconque des revendications précédentes,
**caractérisé en ce qu'**
il présente un cadre de filtre (24) destiné à être monté dans un boîtier (10).

8. Elément filtrant selon l'une quelconque des revendications précédentes,
**caractérisé en ce qu'**
il comporte une couche finale (25) sur les faces latérales reliant les deux faces frontales.

9. Filtre comportant un boîtier (10) avec un orifice d'entrée (13) et un orifice de sortie (15) pour le milieu à filtrer,
**caractérisé en ce qu'**
il comporte un élément filtrant selon l'une quelconque des revendications précédentes.
